# EUROPÄISCHE PATENTANMELDUNG

(11) **EP 3 042 708 A1**
(43) Veröffentlichungstag der Anmeldung: **13.07.2016**
(21) Anmeldenummer: 15197821.0
(22) Anmeldetag: 03.12.2015
(51) Int. Cl.: B01D 35/147, B01D 29/11

(54) **FILTERVORRICHTUNG, INSBESONDERE KRAFTSTOFFFILTERVORRICHTUNG**

(30) Priorität: 07.01.2015 DE 102015200085
(71) Anmelder: Joma-Polytec GmbH, 72411 Bodelshausen (DE)
(72) Erfinder: Pfitzer, Friedhelm, 72414 Rangendingen (DE); Bulach, Sven, 72379 Hechingen (DE); Heinz, Stefan, 72411 Bodelshausen (DE)
(74) Vertreter: DREISS Patentanwälte PartG mbB

(57) **Zusammenfassung**

Filtervorrichtung (10), insbesondere Kraftstofffilter, umfassend ein Filterelement (14), welches eine Rohseite (16) von einer Reinseite (18) trennt, und wenigstens einen das Filterelement (14) umgehenden Bypass zur fluidischen Verbindung der Rohseite (16) mit der Reinseite (18), dadurch gekennzeichnet, dass ein Ventil mit einem Schließkörper (32) zum Öffnen bzw. Schließen des Bypasses (26) vorgesehen ist, wobei rohseitig ein temperatursensitives Stellelement (34) zur Betätigung des Schließkörpers (32) in Abhängigkeit der Temperatur eines rohseitigen zu filternden Mediums derart vorgesehen ist, dass der Bypass (26) unterhalb einer Grenztemperatur geöffnet ist, und dass der Bypass (26) oberhalb der Grenztemperatur geschlossen ist.

## Beschreibung

Die Erfindung betrifft eine Filtervorrichtung, insbesondere eine Kraftstofffiltervorrichtung, umfassend ein Filterelement, welches eine Rohseite von einer Reinseite trennt, und wenigstens einen das Filterelement umgehenden Bypass zur fluidischen Verbindung der Rohseite mit der Reinseite.

Flüssigkeitsfilter finden in vielen industriellen Erzeugnissen Anwendung. Sie werden bevorzugt in Leitungssystemen eingesetzt, um aus der zu filternden Flüssigkeit Partikel abzuscheiden. Die Filterung ist häufig notwendig, um stromabwärts des Flüssigkeitsfilters gelegene Komponenten oder Vorrichtungen des Leitungssystems vor den Partikeln zu schützen, da diese Komponenten oder Vorrichtungen ansonsten beschädigt würden oder in ihrer Funktionsweise beeinträchtigt wären.

Eine technische Herausforderung ist der Einsatz von Flüssigkeitsfiltern unter Betriebsbedingungen, in denen die Flüssigkeit oder in der Flüssigkeit enthaltene Fraktionen einem Phasenübergang vom flüssigen in den festen Zustand unterliegen. In Anwendungen als Kraftstofffilter kann die Filterwirkung bei tiefen Temperaturen durch die Ausbildung von Wachskristallen (Paraffinen) aus dem Kraftstoff beeinträchtigt werden, da diese Wachskristalle die Oberfläche des Filtermediums zusetzen können und dabei den Durchfluss von Flüssigkeit stark reduzieren oder sogar unterbinden können. Durch eine derartige Blockade des Flüssigkeitsfilters in einem Kraftstoffversorgungssystems eines Kraftfahrzeugs kann das Starten des Motors mangels Kraftstoffs in unerwünschter Weise verhindert werden. Weiterhin kann bei Temperaturen, welche unter dem Gefrierpunkt liegen, in der Flüssigkeit enthaltenes Wasser zu Eis werden und dadurch den Filter verstopfen.

Um derartige temperaturbedingte Probleme zu verhindern, sind aus dem Stand der Technik verschiedene Maßnahmen vorbekannt. So werden häufig Elemente in den Kraftstofffilter eingebracht, die die Ausbildung von Wachskristallen verhindern sollen oder derartige Wachskristalle nach ihrer Entstehung durch Temperaturerhöhung wieder auflösen sollen. Weiterhin ist die Erwärmung der Kraftstofffilter zur Verhinderung der Ausbildung von Wachskristallen vorbekannt. Schließlich ist auch eine Rezyklierung von erwärmten, überschüssigen Kraftstoff, welcher in der Einspritzpumpe nicht verbraucht wird, vorbekannt. Diese Lösungen sind alle teuer, vergleichsweise kompliziert aufgebaut sowie regelmäßig auch sehr energieintensiv.

Der vorliegenden Erfindung liegt deswegen die Aufgabe zugrunde, eine Filtervorrichtung bereitzustellen, welche einfach und bauraumsparend aufgebaut ist sowie wenig energieintensiv ist und dennoch funktionssicher arbeitet.

Diese Aufgabe wird mit einer Filtervorrichtung mit den Merkmalen des Anspruchs 1 gelöst. Weitere vorteilhafte Ausgestaltungen der Erfindung können den Unteransprüchen entnommen werden.

Es ist folglich vorgesehen, dass die Vorrichtung wenigstens einen das Filterelement umgehenden Bypass zur fluidischen Verbindung der Rohseite mit der Reinseite umfasst, wobei ein Ventil mit einem Schließkörper zum Öffnen beziehungsweise Schließen des Bypasses vorgesehen ist. Weiterhin ist rohseitig ein temperatursensitives Stellelement zur Betätigung des Schließkörpers in Abhängigkeit der Temperatur eines rohseitigen zu filternden Mediums vorgesehen. Bei dem Medium kann es sich dabei insbesondere um Flüssigkeit wie beispielsweise Kraftstoff handeln. Dabei ist der Bypass unterhalb einer Grenztemperatur geöffnet, während der Bypass oberhalb der Grenztemperatur geschlossen ist.

Dadurch, dass der Schließkörper mittels eines temperatursensitiven Elements betätigt wird, kann eine besonders einfache Möglichkeit bereitgestellt werden, eine bei niedrigen Temperaturen funktionssichere Filtervorrichtung bereitzustellen.

Im Gegensatz zum Stand der Technik ist es damit nicht mehr nötig, das Filterelement energieintensiv zu erwärmen, erwärmten überschüssigen Kraftstoff zu rezyklieren oder Elemente in den Kraftstofffilter einzubringen, welche die Ausbildung von Feststoffen verhindern sollen.

Unterschreitet das rohseitige zu filternde Medium folglich eine Grenztemperatur, so betätigt das temperatursensitive Stellelement den Schließkörper derart, dass der Bypass geöffnet wird, sodass das zu filternde Medium ungefiltert durch den Bypass zur Reinseite strömen kann und dabei das die Rohseite von der Reinseite trennende Filterelement umgeht. Insbesondere bei Kraftstofffiltern kann dabei in Kauf genommen werden, dass der Kraftstoff dann unfiltiert bleibt, da Temperaturen unterhalb der Grenztemperatur lediglich sehr selten vorliegen. Es überwiegt die Notwendigkeit, den Zufluss von Kraftstoff sicherzustellen, sodass das Starten eines Kraftfahrzeugs nicht in unerwünschter Weise beeinträchtigt wird. Vorteilhafterweise erstreckt sich der Bypass dabei durch das Filterelement hindurch. Damit kann eine besonders einfache aufgebaute Filtervorrichtung bereitgestellt werden. Hierbei kann es sich beispielsweise auch um einen Filterelementdurchbruch handeln. Weiterhin ist denkbar, dass das Filterelement einen Filterrahmen aufweist und sich der Bypass durch den Filterrahmen hindurch erstreckt oder dass der Bypass durch einen Durchbruch durch den Filterrahmen gebildet wird.

Weiterhin ist vorteilhaft, wenn der Schließkörper als elastisch nachgiebige Schließzunge ausgebildet ist. Dabei ist denkbar, dass die Schließzunge eine Grundstellung aufweist, in welcher der Bypass geöffnet ist. Oberhalb der Grenztemperatur wird die Schließzunge mittels des Stellelements in die Geschlossenstellung betätigt, sodass der Bypass geschlossen ist.

Gemäß einer besonders vorteilhaften Ausgestaltung der Erfindung weist das Filterelement einen kreiszylindrischen Abschnitt auf. Dabei ist insbesondere vorteilhaft, wenn sich der Bypass radial durch das Filterelement hindurch erstreckt. Damit kann eine besonders platzsparend aufgebaute Filtervorrichtung bereitgestellt werden. Der kreiszylindrische Abschnitt kann dabei als Hohlkörper ausgebildet sein, wobei die Rohseite radial außen und die Reinseite radial innen oder umgekehrt liegen kann.

Dabei ist denkbar, dass an der rohseitigen Mantelfläche des kreiszylindrischen Abschnitts ein Ringelement angeordnet ist. Das Ringelement kann dabei sich in axialer Richtung erstreckende Schließzunge aufweisen. Damit kann eine besonders einfach aufgebaute Filtervorrichtung bereitgestellt werden, bei der der Schließkörper auf besonders einfache Art und Weise am Filterelement angeordnet ist. Das Ringelement und/oder die Schließzunge können/kann dabei aus Federstahl bestehen.

Weiterhin ist denkbar, dass das Stellelement um den kreiszylindrischen Abschnitt sowie um die Schließzunge umlaufend angeordnet ist. Dadurch, dass das Stellelement um die Schließzunge umläuft, kann ein unmittelbares Zusammenwirken des Stellelements mit der Schließzunge bereitgestellt werden. Dabei liegt folglich ein Kräftegleichgewicht der radialen Kraftkomponenten der Schließzunge sowie des Stellelements vor. Die Schließzunge drängt in die Grundstellung, während das Stellelement eine entgegengesetzte Kraft derart ausübt, dass die Schließzunge in die Geschlossenstellung, in der der Bypass geschlossen ist, gedrängt wird. Oberhalb der Grenztemperatur ist die Radialkraft des Stellelements größer als die Radialkraft der Schließzunge, sodass die Schließzunge die Geschlossenstellung einnimmt, während unterhalb der Grenztemperatur die Radialkraft der Schließzunge die Radialkraft des Stellelements übersteigt, sodass die Schließzunge die Geschlossenstellung verlässt.

Das Stellelement kann dabei drahtförmig ausgebildet sein. Vorzugsweise verläuft das Stellelement entlang des gesamten Umfangs des kreiszylindrischen Abschnitts. Denkbar ist, dass das Stellelement unter Vorspannung am Filterelement angeordnet ist. Damit kann verhindert werden, dass sich das Stellelement während des Betriebs vom Filterelement löst.

Dabei kann die dem Bypass abgewandte Seite des Schließkörpers eine Aufnahme zur Anordnung des Stellelements aufweisen. Bei der Aufnahme kann es sich beispielsweise um eine Nut handeln in welche das Stellelement eingreift.

Besonders vorteilhaft hat es sich herausgestellt, wenn mehrere Bypässe vorgesehen sind, wobei jedem Bypass jeweils ein Ventil zugeordnet ist. Damit kann ein ausreichend hoher Mediumfluss, insbesondere Kraftstofffluss, unterhalb der Grenztemperatur von der Rohseite zur Reinseite bereitgestellt werden. Die Bypässe können dabei regelmäßig beabstandet voneinander angeordnet sein.

Dabei ist insbesondere auch denkbar, dass lediglich ein Stellelement vorgesehen ist, das die Schließkörper der mehreren Ventile betätigt. Damit kann eine besonders einfach aufgebaute Filtervorrichtung bereitgestellt werden, bei der mittels eines Stellelements mehrere Ventile und damit mehrere Bypässe betätigt werden.

Als ganz besonders vorteilhaft hat es sich herausgestellt, wenn das Stellelement aus einem SMA (Shape Memory Alloy)-Werkstoff hergestellt ist oder einen solchen umfasst. Derartige Formgedächtnislegierungen sind aus dem Stand der Technik bekannt. Mit Hilfe derartiger Formgedächtnislegierungen kann auf besonders einfache Art und Weise eine temperaturabhängige Schaltung des Stellelements bereitgestellt werden. SMA-Legierungen können unterhalb einer Grenztemperatur verformt werden und nehmen bei Erwärmung über eine Grenztemperatur wieder ihre ursprüngliche Form ein. Über die Legierung ist dabei einstellbar, bei welcher Grenztemperatur eine Gefügeumwandlung von insbesondere Martensit zu Austenit stattfindet. Dieser Prozess ist reversibel, was bedeutet, dass dann, wenn die Formgedächtnislegierung unter eine Grenztemperatur erkaltet, eine Phasenumwandlung von insbesondere Austenit zu Martensit stattfindet.

Andererseits ist auch denkbar, dass das Stellelement am Schließkörper derart angeordnet ist, dass es zusammen mit dem Schließkörper ein Bimetall ausbildet. Das Stellelement kann folglich als Metallschicht ausgebildet sein, wobei das Metall aus dem der Schließkörper besteht von dem Metall aus dem das Stellelement besteht, unterschiedlich ist, sodass Schließkörper und Stellelement unterschiedliche Wärmeausdehnungskoeffizienten aufweisen. Die unterschiedliche thermische Ausdehnung führt zu einer Verbiegung der bimetallischen Anordnung und damit auch des Schließkörpers, wobei der Schließkörper oberhalb einer Grenztemperatur die Geschlossenstellung einnimmt.

Die Filtervorrichtung kann ein Rückstellelement, insbesondere eine Rückstellfeder, aufweisen, das sich einerseits am Filterrahmen und andererseits an den Schließzungen abstützt und dabei den Schließkörper in eine Stellung drängt, in der die Bypässe geöffnet sind.

Weitere Einzelheiten und vorteilhafte Ausgestaltungen der Erfindung sind der nachfolgenden Beschreibung zu entnehmen anhand derer Ausführungsbeispiele der Erfindung näher beschrieben und erläutert werden.

Es zeigen:
- Figur 1:: Perspektive Ansicht eines ersten Ausführungsbeispiels einer Kraftstofffiltervorrichtung mit geschlossenen Bypässen;
- Figur 2:: schematische perspektivische Ansicht eines teilweise geschnittenen Abschnitts der Filtervorrichtung gemäß der Figur 1 mit geöffneten Bypässen;
- Figur 3:: perspektivische Ansicht eines teilweise geschnittenen Abschnitts der Vorrichtung gemäß der Figur 1 mit geschlossenen Bypässen; und
- Figur 4:: perspektive Ansicht eines zweiten Ausführungsbeispiels einer Kraftstofffiltervorrichtung mit geöffneten Bypässen.

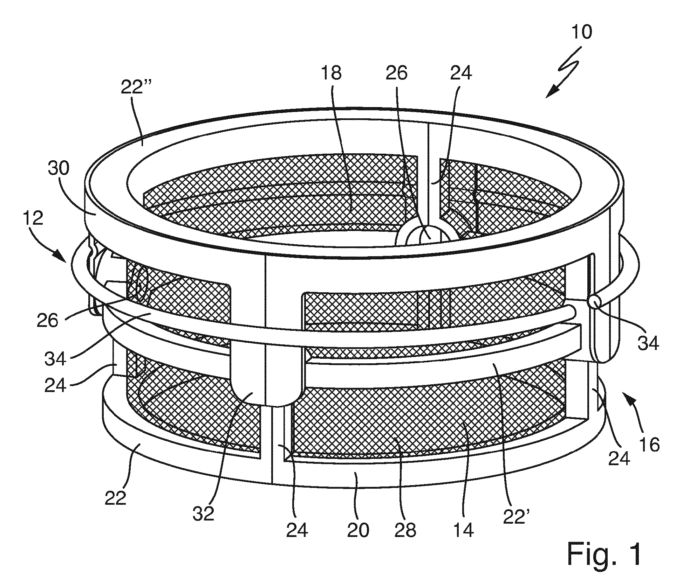

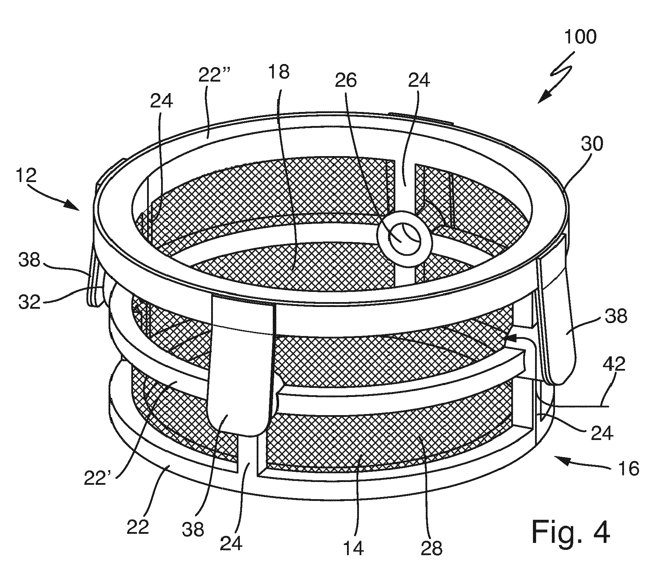

Die Figuren 1 und 4 zeigen den kreiszylindrischen Abschnitt 12 einer Kraftstofffiltervorrichtung 10 mit einem Filterelement 14, das eine Rohseite 16 von einer Reinseite 18 trennt. Das Filterelement 14 umfasst eine Filterfläche 28 und einen Rahmen 20 und ist als Hohlkörper ausgebildet, wobei zu reinigender Kraftstoff von der radial außengelegenen Rohseite 16 durch die filteraktive Filterfläche 28 zur radial innen gelegenen Reinseite 18 strömen kann.

Der Filterrahmen 20 wird dabei von drei axial voneinander beabstandeten Ringen gebildet, wobei die Ringe 22, 22', 22" mittels vier in Abstand von 90 Grad zueinander angeordneten Längsstreben 24 miteinander verbunden sind.

In dem Bereich, in dem die Längsstreben 24 und der mittlere Ring 22' miteinander verbunden sind, weisen die Längsstreben 24 einen rohrförmigen Durchbruch 26 von der Rohseite 16 zur Reinseite 18 auf, wobei die Durchbrüche 26 folglich Bypässe darstellen, die das Filterelement 14 umgehen. Zur Umgehung wird eine direkte fluidische Verbindung der Rohseite 16 mit der Reinseite 18 hergestellt und somit die Trennung der Rohseite 16 und der Reinseite 18 umgegangen. Die Bypässe erstrecken sich dabei radial durch das Filterelement 14.

In den Zwischenabschnitten des Rahmens 20 sind filteraktive Filterflächen 28 angeordnet.

Um den äußeren Ring 22" des Filterrahmens 20 ist ein Ringelement 30 aus Federstahl umlaufend angeordnet. Das Ringelement 30 weist sich in axialer Richtung erstreckende Schließzungen 32 aus Federstahl auf, die mit dem Ringelement 30 einstückig ausgebildet sind. Die Schließzungen 32 sind dabei elastisch nachgiebig ausgebildet und sind in der Grundstellung derart am Ringelement 30 angeordnet, dass die Durchbrüche 26 geöffnet sind. Die Durchbrüche 26 werden geschlossenen, indem die Schließzungen 32 gegen Ventilsitze 33 beaufschlagt werden.

Die Ventilsitze 33 werden durch diejenigen Außenmantelabschnitte des Filterrahmens 20 gebildet, die die die Bypässe bildenden Durchbrüche 26 umgeben.

Gemäß des in den Figuren 1 bis 3 gezeigten ersten Ausführungsbeispiel ist um das Filterelement 12 sowie um die Schließzungen 32 ein drahtförmig ausgebildetes Stellelement 34 umlaufend unter Vorspannung angeordnet. Dabei weisen die Schließzungen 32 an den Bypässen 26 abgewandten Seiten halbrunde Aufnahmen 36 zur Anordnung des Stellelements 32 auf. Damit kann das Stellelement 32 verliersicher an dem Filterelement 12 angeordnet werden.

Das Stellelement 32 ist aus einem SMA-Werkstoff hergestellt, der unterhalb einer Grenztemperatur als Martensit und oberhalb der Grenztemperatur als Austenit vorliegt.

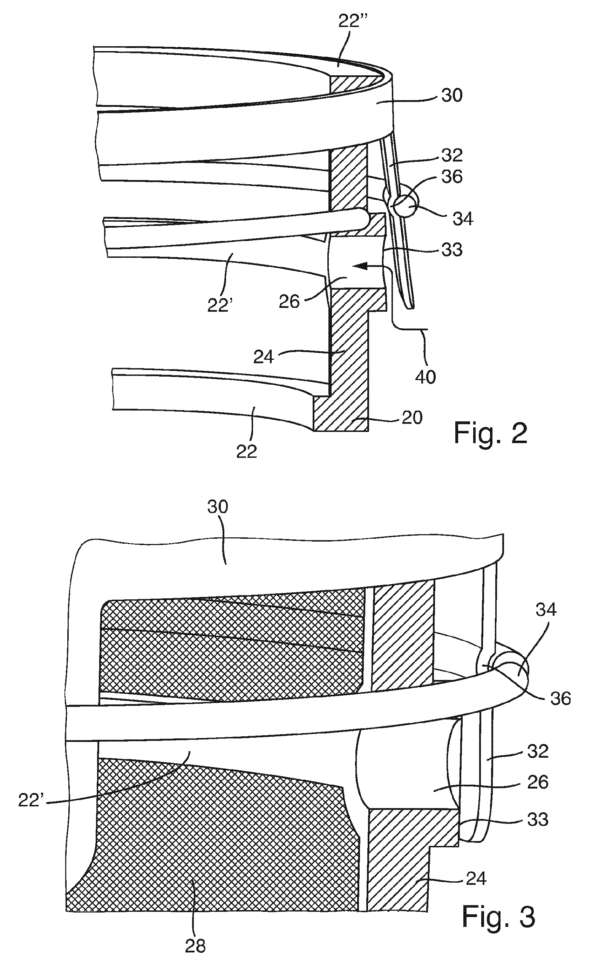

Wie in Figur 2 gezeigt ist, üben die Schließzungen 32 unterhalb einer Grenztemperatur eine nach radial außen gerichtete Kraft auf das Stellelement 34 aus, welche größer ist als diejenige nach radial innen gerichtete Kraft, die das Stellelement 34 auf die Schließzungen 32 ausübt. Die Bypässe 26 sind folglich geöffnet, wobei die Schließzungen 32 von den Ventilsitzen 33 abgehoben sind. Dabei strömt Flüssigkeit durch die Bypässe von der Rohseite 16 zur Reinseite 18 (vgl. Pfeil 40).

Überschreitet die Temperatur des rohseitigen zu reinigenden Kraftstoffs die Grenztemperatur, so findet eine Gefügeumwandlung im Stellelement 34 derart statt, dass dieses in seine ursprüngliche, radial kleinere Form drängt, wobei diejenige nach radial innen gerichtete Kraft, die das Stellelement 34 auf die Schließzungen 32 ausübt, größer ist als diejenige nach radial außen gerichtete Kraft, die die Schließzungen 32 auf das Stellelement 34 ausüben. Dadurch werden in Figur 3 die Schließzungen 32 gegen die Ventilsitze 33 beaufschlagt und die Bypässe 26 schließen. Um von der Rohseite 16 zur Reinseite 18 zu gelangen, muss Flüssigkeit durch die filteraktive Filterfläche 28 des Filterelements 14 strömen. Aufgrund der umlaufenden Anordnung des Stellelements 14 werden alle vier Federzungen zeitgleich betätigt.

Figur 4 zeigt eine zweite Ausführungsform einer Kraftstofffiltervorrichtung 100, wobei die der Ausführungsform gemäß Figur 1 entsprechenden Bauteile mit entsprechenden Bezugszeichen versehen sind. Sie unterscheidet sich zum einen von der in den Figuren 1 bis 3 gezeigten Ausführungsform 10 dadurch, dass nicht ein Stellelement 34 vorgesehen ist, das alle Schließzungen 32 betätigt, sondern dass jede Schließzunge 32 ein separates Stellelement 38 aufweist. Dabei können die Schließzungen 32 gemäß Figur 4 entweder eine Schließstellung aufweisen, in der die Bypässe 26 geschlossen sind, oder eine Öffnungsstellung aufweisen, in der die Bypässe 26 geöffnet sind.

Die Stellelemente 38 sind dabei aus einem Metall hergestellt, welches unterschiedlich von demjenigen Metall ist, aus dem das Ringelement 30 hergestellt ist. Dabei unterscheiden sich der Wärmeausdehnungskoeffizient der Schließzungen 32 respektive des Ringelements 30 vom Wärmeausdehnungskoeffizient der Stellelemente 38. Folglich wirken die Stellelemente 38 und die Schließzungen 32 als Bimetalle miteinander. Die Stellelemente 38 sind einerseits am Ringelement 30 und andererseits an den Schließungen 32 angeordnet. Dabei weist derjenige Abschnitt der Stellelemente 38, der mit den Schließzungen 32 überlappt gleiche Maße wie die Schließzungen 32 auf.

Um oberhalb der Grenztemperatur von der Rohseite 16 zur Reinseite 18 zu gelangen, muss Flüssigkeit durch die filteraktive Filterfläche 28 des Filterelements 14 strömen und kann damit das Filterelement 14 nicht umgehen, da die Bypässe 26 dadurch verschlossen sind, dass die Schließzungen 32 gegen die Ventilsitze 33 beaufschlagt sind.

Wie in Figur 4 gezeigt ist, führen die unterschiedlichen Wärmeausdehnungskoeffizienten der Stellelemente 38 und der Schließzungen 32 zu einer Verbiegung der Schließzungen 32 weg von den Ventilsitzen 33, wenn die Temperatur des rohseitigen zu reinigenden Kraftstoffs unter eine Grenztemperatur fällt, sodass die Bypässe 26 geöffnet sind. Um von der Rohseite 16 zur Reinseite 18 zu gelangen, kann Flüssigkeit durch die Bypässe 26 strömen (vgl. Pfeil 42) und damit das Filterelement 14 umgehen.

## Patentansprüche

1. Filtervorrichtung (10,100), insbesondere Kraftstofffilter, umfassend ein Filterelement (14), welches eine Rohseite (16) von einer Reinseite (18) trennt, und wenigstens einen das Filterelement (14) umgehenden Bypass zur fluidischen Verbindung der Rohseite (16) mit der Reinseite (18), **dadurch gekennzeichnet, dass** ein Ventil mit einem Schließkörper (32) zum Öffnen bzw. Schließen des Bypasses (26) vorgesehen ist, wobei rohseitig ein temperatursensitives Stellelement (34) zur Betätigung des Schließkörpers (32) in Abhängigkeit der Temperatur eines rohseitigen zu filternden Mediums derart vorgesehen ist, dass der Bypass (26) unterhalb einer Grenztemperatur geöffnet ist, und dass der Bypass (26) oberhalb der Grenztemperatur geschlossen ist.

2. Filtervorrichtung (10,100) nach Anspruch 1, **dadurch gekennzeichnet, dass** sich der Bypass (26) durch das Filterelement (14) hindurch erstreckt.

3. Filtervorrichtung (10,100) nach einem der vorhergehenden Ansprüche, **dadurch gekennzeichnet, dass** der Schließkörper (32) als elastisch nachgiebige Schließzunge (32) derart ausgebildet ist, dass der Bypass (26) in der Grundstellung des Schließkörpers (32) geöffnet ist.

4. Filtervorrichtung (10,100) nach einem der vorhergehenden Ansprüche, **dadurch gekennzeichnet, dass** das Filterelement (14) einen kreiszylindrischen Abschnitt (12) aufweist, wobei der Bypass (26) sich radial durch das Filterelement (14) hindurch erstreckt.

5. Filtervorrichtung (10,100) nach den Ansprüchen 3 oder 4, **dadurch gekennzeichnet, dass** ein Ringelement (30) mit einer sich in axialer Richtung erstreckenden Schließzunge (32) an der rohseitigen Mantelfläche des kreiszylindrischen Abschnitts (12) des Filterelements (14) angeordnet ist.

6. Filtervorrichtung (10,100) nach einem der Ansprüche 3, 4 oder 5, dadurch dass das Stellelement (34) um den kreiszylindrischen Abschnitt (12) des Filterelements (14) und um die Schließzunge (32) umlaufend angeordnet ist.

7. Filtervorrichtung (10,100) nach einem der vorhergehenden Ansprüche, **dadurch gekennzeichnet, dass** das Stellelement (34) unter Vorspannung am Filterelement (14) angeordnet ist.

8. Filtervorrichtung (10,100) nach einem der Ansprüche 3 bis 7, **dadurch gekennzeichnet, dass** an der dem Bypass (26) abgewandten Seite der Schließzunge (32) eine Aufnahme (36) zur Anordnung des Stellelements (34) vorgesehen ist.

9. Filtervorrichtung (10,100) nach einem der vorhergehenden Ansprüche, **dadurch gekennzeichnet, dass** mehrere Bypässe (26) vorgesehen sind, wobei jedem Bypass (26) jeweils ein Ventil zugeordnet ist.

10. Filtervorrichtung (10,100) nach Anspruch 9, **dadurch gekennzeichnet, dass** lediglich ein Stellelement (34) vorgesehen ist, das die Schließkörper (32) der mehreren Ventile betätigt.

11. Filtervorrichtung (10) nach einem der vorhergehenden Ansprüche, **dadurch gekennzeichnet, dass** das Stellelement (34) aus einem SMA-Werkstoff hergestellt ist oder einen solchen umfasst.

12. Filtervorrichtung (100) nach einem der Ansprüche 1 bis 10, **dadurch gekennzeichnet, dass** das Stellelement (38) am Schließkörper (32) derart angeordnet ist, dass es mit dem Schließkörper (32) als Bimetall zusammenwirkt.

13. Filtervorrichtung (100) nach den Ansprüchen 5 und 12, **dadurch gekennzeichnet, dass** das Stellelement (38) abschnittsweise am Ringelement (30) und abschnittsweise am Schließkörper (32) angeordnet ist.
